# NEUE EUROPÄISCHE PATENTSCHRIFT

(11) **EP 1 185 589 B2**
(45) Veröffentlichungstag und Bekanntmachung des Hinweises auf die Entscheidung über den Einspruch: **30.09.2009**
(45) Hinweis auf die Patenterteilung: 21.04.2004
(21) Anmeldenummer: 01905676.1
(22) Anmeldetag: 23.01.2001
(51) Int. Cl.: C09C 1/36, C09C 3/04, C08L 95/00, C09C 1/24, C09B 67/20

(54) **PIGMENTGRANULAT ZUR EINFÄRBUNG VON UNPOLAREN MEDIEN SOWIE VERFAHREN ZU DESSEN HERSTELLUNG**
PIGMENT GRANULATE FOR COLORING NON-POLAR MEDIA AND METHODS FOR THE PRODUCTION THEREOF
PIGMENTS SOUS FORME DE GRANULES POUR TEINTER DES SUBSTANCES NON POLAIRES ET PROCEDE PERMETTANT DE LES PRODUIRE

(30) Priorität: 26.01.2000 DE 10003248
(43) Veröffentlichungstag der Anmeldung: 13.03.2002
(73) Patentinhaber: Brockhues GmbH & Co. KG, 65396 Walluf (DE)
(72) Erfinder: EGGER, Christian, I-10040 Pralormo (IT); NUNGESS, Klaus, 63263 Neu-Isenburg (DE); VEIT, Adolf, 65187 Wiesbaden (DE); VOGLER, Stefan, 65396 Walluf (DE)
(74) Vertreter: Maiwald Patentanwalts GmbH
(86) Internationale Anmeldenummer: PCT/EP2001/000709
(87) Internationale Veröffentlichungsnummer: WO 2001/055264

(56) Entgegenhaltungen:
- EP-A- 0 257 423
- EP-A- 0 418 683
- EP-A- 0 567 882
- EP-A- 0 651 031
- EP-A1- 0 424 896
- EP-A2- 0 735 092
- WO-A-97/20892
- WO-A1-99//042532
- DE-A- 2 940 156
- DE-A1- 2 418 076
- DE-A1- 2 653 599
- US-A1- 4 230 501
- US-A1- 5 880 193

## Beschreibung

Die Erfindung betrifft Pigmentgranulate zur Einfärbung von unpolaren Medien wie Asphalt, Bitumen, bituminösen Stoffen, Teer und Kunststoffen sowie Verfahren zur Herstellung solcher Granulate.

Zur Einfärbung von unpolaren Stoffen, insbesondere von Asphalt und Kunststoffen werden (neben organischen Pigmenten) gegenwärtig bereits auch anorganische Pigmente, insbesondere auf der Basis verschiedener Eisenoxide eingesetzt. Pigmentgranulate zeigen dabei gegenüber Pulvern und Pasten sehr erhebliche Vorteile, beispielsweise bei der Handhabung, bei der Vermeidung von Staub und dergleichen, aber auch hinsichtlich ihrer Dispergiereigenschaften.

Aus der DE-A1 29 08 202 ist es bekannt, wasserhaltige Kohlenstoffpräparate (mit 30 % bis 80 % Wasser) als Perlgranulate zum Färben in der Zementindustrie einzusetzen. Diese Technik ist für andere Pigmente nicht verwendbar, und Granulate mit solchen Wassergehalten sind grundsätzlich nachteilig, auch für Einsatzzwecke im Asphalt- und Kunststoffbereich.

Aus der DE-A1 29 40 156 ist es bekannt, Pigmente zusammen mit Bindemitteln durch Sprühgranulation zu granulieren. Die so erzeugten Pigmentgranulate finden Einsatz für die Herstellung von Farbtinten, die Färbung von Kunststoffen, Lacken und dergleichen. Ein Bezug zur Einfärbung von Baustoffen, Asphalt und dergleichen besteht nicht.

Aus der EP-A2 0 191 278 sind Farbgranulate mit über 5 Gew.-% bis zu 50 Gew.-% Wasser für Baustoffe bekannt.

Die EP-A1 0 567 882 beschreibt Aufbau-, Kompaktierungs- und Sprühgranulate mit Bindemitteln wie insbesondere Maschinenöl, Wachs, Paraffin und dergleichen, die u.a. zum Färben von Asphalt dienen sollen. Zusätzlich zu den Bindemitteln sollen Stoffe wie Ligninsulfonat, Melasse, Stärke und dergleichen eingesetzt werden können. Stoffe wie Ligninsulfonat lassen sich gemäß dieser Offenbarung alleine als Bindemittel nicht verwenden.

Die EP-A-0 651 031 beschreibt ein Verfahren zur Einfärbung von organischen Medien mittels anorganischer Pigmentganulate. Das dort beschriebene Verfahren sieht den Zusatz von Ölen mit einer kinematischen Viskosität bei 40 °C von 1,6 bis 1500 mm²/s als Bindemittel vor.

Die EP-A-0 257 423 offenbart hydrophobe Pigmente und Füllstoffe für die Einarbeitung in Kunststoffe. Die dort beschriebenen Bindemittel umfassen Organopolysiloxane und Polyorganohydrogensiloxane.

Die EP-A-0 418 683 offenbart Rutilmischphasenpigment-Mikrogranulate Verfahren zu ihrer Herstellung und deren Verwendung zum Einfärben von Kunststoffen, Lacken, Baustoffen Email und Keramikglasuren. Als Bindemittel werden Natrium- oder Ammoniumpolyacrylat und Siliconöl beschrieben.

Unter "Granulaten" wird im Kontext dieser Beschreibung jedes Material verstanden, dessen mittlere Korngröße im Vergleich mit Ausgangsmaterialien durch einen Behandlungsschritt vergrößert worden ist. "Granulate" umfassen daher nicht nur Sprühgranulate und Kompaktierungsgranulate, sondern auch beispielsweise Produkte einer Feuchtbehandlung mit anschließender Zerkleinerung.

Wegen der erheblichen Vorteile, im Vergleich mit Pulvern, Pasten und dergleichen, werden Granulate seit Jahrzehnten industriell in größtem Umfang verwendet. Auch für die Verarbeitung von Pigmenten ist die Granulierung seit langem durchgesetzt.

Nun lassen sich Erfahrungen, die mit Pigmentgranulaten in anderen Gebieten gemacht werden, auf das Färben von Baustoffen, Asphalt und dergleichen nicht einfach übertragen. In der Praxis erweisen sich Granulate, die theoretisch fast perfekt geeignet sein sollten, oft als unzureichend, weil sie nicht alle erforderlichen Eigenschaften miteinander kombinieren.

So wird zwar oft eine gute Festigkeit des Granulates erreicht, was dessen Zerstörung bei Verpackung und Transport entgegenwirkt und die Staubbildung zurückhält; dadurch kann aber auf der anderen Seite die Dispergierbarkeit beeinträchtigt werden, und es kommt nicht zu der gewünschten homogenen Färbung und der benötigten Farbstärkeentwicklung.

Granulate mit sehr guten Farbstärken und leichter Dispergierbarkeit sind andererseits oft zu weich und zerfallen bereits vor der Einarbeitung in Asphalt bzw. Kunststoff, was zu vermehrter Staubbildung, zu Rückständen in den Verpackungen, zu verringerter Fließfähigkeit und entsprechend häufigen Fehldosierungen führen kann.

Von den vielfältigen Möglichkeiten der Granulation hat sich in der Praxis die Sprühgranulation durchgesetzt, während zum Beispiel die theoretisch völlig vergleichbare Wirbelbettgranulation bislang keine brauchbaren Granulate hergegeben hat.

In jüngster Zeit sind Vorschläge bekannt geworden, auf Granulate ganz zu verzichten und statt dessen beschichtete Pulver zu verwenden. Als Beispiel sei die WO 97/20892 genannt. Es bleibt abzuwarten, ob sich auf diese Weise breite Teilchengrößenverteilungen aufgrund von Verklumpungen usw. vermeiden lassen und ob sich solche beschichteten Pulver verwenden lassen, ohne die Staubprobleme zu erzeugen, wie sie für den Stand der Technik vor Einführung der Pigmentgranulate typisch waren.

Zur Förderung der Dispergierung und Verteilung der Pigmentgranulate werden Netzund Bindemittel verwendet, die so gewählt werden, daß das Granulat mit der gewünschten Dispergierwirkung zerfällt. Für die Einfärbung von unpolaren Medien, wie insbesondere Asphalt und Kunststoffen werden herkömmlich als Bindemittel für die zu granulierende Mischung hydrophobe Verbindungen wie Öle und Wachse verwendet, die eine ausreichende Dispergierbarkeit der Granulate in dem hydrophoben Anwendungsmedium gewährleisten. Nachteilig an zu granulierenden Mischungen, die auf unpolaren Lösungsmitteln basieren, sind zum einen die höheren Kosten im Vergleich zu einer Mischung beispielsweise auf Wasserbasis und zum anderen, daß bei der Sprühtrocknung der Granulate für die verdampfenden organischen Bindemittel wie Öle und Wachse besondere technische Vorrichtungen und Sicherheitsmaßnahmen erforderlich sind.

Netz- und Bindemittelmischungen auf Wasserbasis, für die sich wasserlösliche Netzund Bindemittel wie insbesondere Ligninsulfonat und dergleichen eignen, weisen jedoch den Nachteil auf, daß mit ihnen eine homogene Verteilung des Pigments in einem unpolaren Anwendungsmedium wie Asphalt, Bitumen oder Kunststoff nicht erreicht wird. Dies führt zu einer ungleichmäßigen Einfärbung, die unerwünscht ist.

Es ist daher eine wesentliche Aufgabe der Erfindung, vor diesem Hintergrund ein Verfahren zur Einfärbung von unpolaren Medien wie Asphalt, Bitumen, bituminösen Stoffen, Teer und Kunststoffen durch Pigmentgranulate vorzuschlagen, das die Einfärbewirkung durch die Pigmente fördert und gleichzeitig die Dispergierung des Pigments in einem unpolaren Anwendungsmedium verbessert. Ferner ist es eine Aufgabe der Erfindung, ein Verfahren anzugeben, mit dem die Versprühbarkeit des Granulats gefördert wird.

Zur Lösung dieser Aufgabe dienen die in den unabhängigen Ansprüchen definierten Merkmale.

Vorteilhafte Ausgestaltungen sind in den Unteransprüchen beschrieben.

Die Aufgabe der Erfindung wird gelöst, indem die Pigmente, insbesondere Eisenoxide und/oder Rußpigmente, bei der Herstellung der Pigmentgranulate mit Mischungen von nichtionogenen Wachsen und/oder Wachsen mit anionischer Ionogenität und/oder Wachsen mit kationischer Ionogenität und mindestens einem Dispergator für polare Systeme vermischt werden. Dabei wurde überraschenderweise gefunden, daß die Mittel zur Förderung der Einfärbung und der Verteilung des Pigments in den unpolaren Medien gemäß der vorliegenden Erfindung derart wirken, daß eine lipophile Beschichtung auf dem Granulat erzeugt wird, wodurch die Dispergierung und damit die homogene Verteilung der Pigmente in unpolaren Medien wie Asphalt, Bitumen, bituminösen Stoffen, Teer und Kunststoffen und folglich auch die Einfärbung der unpolaren Medien überdurchschnittlich gefördert wird.

Bei der Verwendung der Wachse ist zu beachten, daß das Wachs sowohl eine hohe Kratz- als auch Abriebfestigkeit besitzt. Wachse mit diesen Eigenschaften besitzen bei einer bevorzugten Ausführungsform der Erfindung einen Schmelzpunkt in einem Bereich von 50 bis 200°C, vorzugsweise von 50 bis 130°C.

Es ist bei der vorliegenden Erfindung unerheblich, ob die Wachse natürlicher oder synthetischer Herkunft sind. Vorzugsweise werden allerdings synthetische Wachse wie Polyalkylenwachse, insbesondere Polyethylenwachse, Polyethylenglykolwachse, Paraffin-Wachse, Styrol-Acrylat-Wachse, Polytetrafluorethylenwachse und dergleichen verwendet.

Es werden Wachs-Mischungen verwendet, wobei sowohl Mischungen aus Wachsen mit anionischer und/oder kationischer Ionogenität oder Mischungen aus nichtionogenen Wachsen als auch Mischungen aus nichtionogenen Wachsen und Wachsen mit anionischer oder kationischer Ionogenität verwendet werden können. Erfindungsgemäß werden Mischungen aus Polyethylenwachs und Styrolacrylat-Wachs verwendet.

Zur Steigerung des Feststoffgehalts, insbesondere des Pigmentgehalts, in der zu granulierenden Mischung werden erfindungsgemäß Dispergiermittel bzw. Dispergatoren für polare Systeme verwendet, die die Verflüssigung von festem Pigment nach der Zugabe von polaren Lösungsmitteln wie insbesondere Wasser sowie die Formung der Granulate, insbesondere bei der Sprühtrocknung fördern. Letzteres ist insbesondere dann von Vorteil, wenn die vorstehend genannten Wachsmischungen in der zu granulierenden Mischung enthalten sind. Bei dieser bevorzugten Ausführungsform ergibt sich ein synergistischer Effekt, indem sowohl der Pigmentgehalt in der zu granulierenden Mischung und die Formbildung der Granulate erhöht wird als auch die Homogenität der Einfärbung in dem unpolaren Medium gesteigert wird.

Dispergatoren im Rahmen der vorliegenden Erfindung sind wie im Römpp Chemie Lexikon, Georg Thieme Verlag, Stuttgart, New York, 9. Auflage, 1990, Seite 1010, als Mittel definiert, die das Dispergieren von Teilchen in einem Dispersionsmittel erleichtern, indem sie die Grenzflächenspannung zwischen den beiden Komponenten erniedrigen.

Die Dispergatoren für polare Systeme in der zu granulierenden Mischung können bei der vorliegenden Erfindung aus hydrophilen und amphoteren, ionogenen und nicht ionogenen Verbindungen ausgewählt werden. Vorzugsweise können diese Mittel aus Mono- oder Polyhydroxyverbindungen, Mono- oder Polyhydroxyaminoverbindungen, (Poly)Carboxylaten, Polyacrylaten, Ligninsulfonaten, sulfatierten Polyglykolethern, Melaminformaldehykondensaten, Naphthalinformaldehydkondensaten, Alkyl-, Aryl- oder Alkylarylsulfonaten, Polyglykolen, Polyglykolderivaten, PVP, Polyethern, Cellulosederivaten oder Kombinationen aus diesen Verbindungen ausgewählt werden.

Als Monohydroxyverbindungen können einwertige, primäre, sekundäre oder tertiäre, alkylsubstituierte oder nicht substituierte Alkohole verwendet werden, wie beispielsweise 1-Propanol, 2-Methyl-1-propanol, 2-Methyl-2-propanol und dergleichen. Alkohole von C₃ aufwärts werden bevorzugt. Erfindungsgemäß verwendete Polyhydroxyverbindungen umfassen mehrwertige alkylsubstituierte oder nicht substituierte Alkohole, beispielsweise Diole, Glykole wie Ethylenglykol und Polyalkylenglykole, Glycerin, Zuckeralkohole wie Sorbit und Ionosit, Trimethylolpropan und dergleichen. Vorzugsweise werden bei der vorliegenden Erfindung 2-Methyl-1-propanol und Glykole verwendet.

Die als Dispergatoren verwendeten Monohydroxyaminoverbindungen umfassen einwertige, primäre, sekundäre oder tertiäre, alkylsubstituierte oder nicht alkylsubstituierte Aminoalkohole, wie beispielsweise 2-Amino-1-propanol, 2-Amino-1-butanol, 3-Amino-1-propanol, 2-Amino-2-methyl-1-propanol und dergleichen. Aminoalkohole von C₃ aufwärts werden bevorzugt. Als erfindungsgemäße Polyhydroxyaminoverbindungen können mehrwertige alkylsubstituierte oder nicht substituierte Alkohole wie beispielsweise 2-Amino-2-methyl-1,3-propandiol und dergleichen verwendet werden. Bei einer bevorzugten Ausführungsform der vorliegenden Erfindung wird 2-Amino-2-methyl-1-propanol verwendet.

Verwendbar sind daneben andere Verbindungen mit relativ geringem Molekulargewicht (vorzugsweise C₁ bis C₁₀₀, besonders bevorzugt C₂ bis C₅₀, insbesondere C₃ bis C₂₅), die eine oder mehrere hydrophile Gruppen tragen. Dabei kann es sich um NH₂- und OH-, aber auch um Ethergruppen, Carboxylgruppen, Säurefunktionen und dergleichen handeln, gegebenenfalls auch in neutralisierter (Salz-)Form.

Die Gesamtmenge an bei dem erfindungsgemäßen Verfahren für die Herstellung der Pigmentgranulate verwendeten, die Einfärbung und die Verteilung des Pigmentes in unpolaren Medien fördernden Mitteln beträgt mindestens 0,01 Gew.-%, vorzugsweise 0,1 bis 5 Gew.-% und besonders bevorzugt von 0,4 bis 3,5 Gew.-%, bezogen auf die Gesamtmenge der zu granulierenden Mischung.

Die Gesamtmenge an bei dem erfindungsgemäßen Verfahren für die Herstellung von Pigmentgranulaten verwendeten Dispergatoren für polare Systeme beträgt mindestens 0,05 Gew.-%, vorzugsweise 0,1 bis 3 Gew.-% und besonders bevorzugt 0,25 bis 1,7 Gew.-%, bezogen auf die Gesamtmenge der zu granulierenden Mischung.

Erfindungsgemäß können die Pigmente als Pulvermischung oder als Suspension in einem Lösungsmittel mit Mischungen von nichtionogenen Wachsen und/oder Waschen mit anionischer Ionogenität und/oder Wachsen mit kationischer Ionogenität und mindestens einem Dispergator für polare Systeme vermischt werden. Die resultierenden Mischungen können durch Verdichten, Kompaktieren, Pressen, Brikettieren, Sprühen, Wirbelbetttrocknen oder durch Aufbaugranulieren oder durch Kombinationen der vorgenannten Verfahren erzeugt werden. Vorzugsweise werden Sprühverfahren eingesetzt.

Die Verwendung der Granulate beim Vermischen mit unpolaren Medien wie Asphalt, Bitumen, bituminösen Stoffen, Teer und Kunststoffen entspricht den bekannten und üblichen Vorgehensweisen.

Die nachfolgenden Beispiele dienen der Erläuterung der Erfindung.

### Beispiele 1 bis 2

Zwei Pigmentgranulate, welche sich für das erfindungsgemäße Verfahren zur Einfärbung von unpolaren Medien wie insbesondere von Asphalt und Kunststoffen eignen, wurden nach den in den folgenden Tabellen gezeigten Rezepturen hergestellt:

| Pigmentgranulatmischung 1 | |
|---|---|
| Stoff | Gew.-% |
| Frischwasser | 34,66 |
| Polyacrylat | 1,15 |
| 2-Animo-2-methyl-1-propanol | 0,25 |
| Eisenoxidrot | 62,50 |
| Natronlauge (20%-ig) | 0,20 |
| Wükonil LP 50 | 0,83 |
| Südranol 340 | 0,31 |
| Wükonil MS 30 | 0,10 |

| Pigmentgranulatmischung 2 | |
|---|---|
| Stoff | Gew.-% |
| Frischwasser | 32,5 |
| Polyethylenpropylenglykol | 1,5 |
| 2-Animo-2-methyl-1-propanol | 0,25 |
| Eisenoxidrot | 62,5 |
| Natronlauge (20%-ig) | 0,20 |
| Wükonil LP 50 | 1,66 |
| Südranol 340 | 0,89 |
| Wükonil MS 30 | 0,50 |

In den vorstehenden Tabellen bedeutet:
- Wükonil LP 50:: Makroparaffin (anionisch, Schmelzbereich: 60° C)
- Südranol 340:: Polyethylen-Wachs (anionisch, Schmelzbereich: 95° C)
- Wükonil MS 30:: Styrol-Acrylat-Wachs (anionisch, Schmelzbereich: >80°C)

## Patentansprüche

1. Pigmentgranulat zur Einfärbung von unpolaren Medien wie Asphalt, Bitumen, bituminösen Stoffen, Teer und Kunststoffen, hergestellt aus einer Mischung, die Pigmente, Mischungen von nicht-ionogenen Wachsen und/oder Wachsen mit anionischer Ionogenität und/oder Wachsen mit kationischer Ionogenität, sowie mindestens einen Dispergator für polare Systeme sowie gegebenenfalls Lösungsmittel umfassen, wobei die verwendeten Wachse eine Mischung aus Polyethylenwachs und Styrol-Acrylat-Wachs umfassen.

2. Granulat nach Anspruch 1,
**dadurch gekennzeichnet, dass** die verwendeten Wachse einen Schmelzpunkt aufweisen, der im Bereich von 50 °C - 200 °C liegt.

3. Granulat nach Anspruch 2,
**dadurch gekennzeichnet, dass** die verwendeten Wachse einen Schmelzpunkt aufweisen, der im Bereich von 50 °C - 130 °C liegt.

4. Granulat nach einem der vorhergehenden Ansprüche,
**dadurch gekennzeichnet, dass** die verwendeten Wachse eine Mischung aus Polyethylenwachs und Paraffinwachs umfassen.

5. Granulat nach einem der vorstehenden Ansprüche,
**dadurch gekennzeichnet, dass** die Gesamtmenge an den die Einfärbung und die Verteilung in unpolaren Medien fördernden Mitteln im Bereich von 0,1 bis 5 Gew.-%, bezogen auf die Gesamtmenge der zu granulierenden Mischung, liegt.

6. Granulat nach Anspruch 5,
**dadurch gekennzeichnet, dass** die Gesamtmenge an den die Einfärbung und die Verteilung in unpolaren Medien fördernden Mitteln im Bereich von 0,4 bis 3,5 Gew.-%, bezogen auf die Gesamtmenge der zu granulierenden Mischung, liegt.

7. Granulat nach Anspruch 1,
**dadurch gekennzeichnet, dass** der Dispergator für polare Systeme aus der Gruppe der Mono- oder Polyhydroxyverbindungen, Mono- oder Polyhydroxyaminoverbindungen, (Poly)Carboxylate, Polyacrylate, Ligninsulfonat, sulfatierten Polyglykolether, Melaminformaldehydkondensate, Naphthalinformaldehydkondensate, Alkyl-, Aryl- oder Alkylarylsulfonate, Polyglykole, Polyglykolderivate, Polyether, Cellulosederivate und Kombinationen aus diesen Verbindungen, ausgewählt ist.

8. Granulat nach Anspruch 7,
**dadurch gekennzeichnet, dass** die Hydroxyaminoverbindungen Aminomethylpropanole umfassen.

9. Granulat nach Anspruch 7,
**dadurch gekennzeichnet, dass** die Hydroxyverbindungen Methylpropanole und Glykole umfassen.

10. Granulat nach Anspruch 1,
**dadurch gekennzeichnet, daß** die Gesamtmenge der Dispergatoren für polare Systeme im Bereich von 0,1 bis 3 Gew.-%, bezogen auf die Gesamtmenge der zu granulierenden Mischung, liegt.

11. Granulat nach Anspruch 10,
**dadurch gekennzeichnet, daß** die Gesamtmenge der Dispergatoren für polare Systeme im Bereich von 0,25 bis 1,7 Gew.-%, bezogen auf die Gesamtmenge der zu granulierenden Mischung, liegt.

12. Granulat nach einem der vorstehenden Ansprüche,
**dadurch gekennzeichnet, dass** die Pigmente aus Eisenoxiden und Rußpigmenten ausgewählt sind.

13. Granulat nach einem der vorstehenden Ansprüche,
**dadurch gekennzeichnet, dass** das oder die Lösungsmittel polare Lösungsmittel wie insbesondere Wasser sind.

14. Verwendung von Mischungen von Wachsen nach Anspruch 1 als die Einfärbung und die Verteilung in unpolaren Medien fördernde Mittel, bei der Herstellung von Pigmentgranulaten, die zur Einfärbung von unpolaren Medien wie Asphalt, Bitumen, bituminösen Stoffen, Teer und Kunststoffen verwendbar sind.

15. Verfahren zur Herstellung eines Granulats nach einem der Ansprüche 1 bis 13,
**dadurch gekennzeichnet, dass** Pigmente als Pulvermischung oder als Suspension in einem Lösungsmittel mit Mischungen von nicht-ionogenen Wachsen und/oder Wachsen mit anionischer Ionogenität und/oder Wachsen mit kationischer Ionogenität, sowie mindestens einem Dispergator für polare Systeme vermischt werden, und die resultierende Mischung durch Verdichten, Kompaktieren, Pressen, Brikettieren, Sprühen, Wirbelschichttrocknung oder durch Aufbaugranulation oder durch Kombination vorgenannter Granulierungsverfahren granuliert wird.

16. Verfahren nach Anspruch 15,
**dadurch gekennzeichnet, dass** das Granulat durch Sprühverfahren erzeugt wird.

## Claims

1. A pigment granulate for the coloring of homopolar media like asphalt, bitumen, bituminous materials, tar and plastics, prepared from a mixture comprising pigments, mixtures of non-ionogenic waxes and/or waxes with anionic ionogenity and/or waxes with cationic ionogenity, and at least one dispersant for polar systems and optionally solvent wherein the waxes used comprise a mixture of polyethylene wax and styrene-acrylate wax.

2. The granulate of claim 1, wherein the waxes used have a melting point in the range of 50°C to 200°C.

3. The granulate of claim 2, wherein the waxes used have a melting point in the 50°C to 130°C range.

4. The granulate of any one of the previous claims, wherein the waxes used comprise a mixture of polyethylene wax and paraffin wax.

5. The granulate of any one of the previous claims, wherein the total quantity of the agent to promote the coloring and the distribution of pigment in said homopolar media ranges from 0.1 to 5% by weight based on the total weight of the mixture to be granulated.

6. The granulate of claim 5, wherein the total quantity of the agent to promote the coloring and the distribution of pigment in homopolar media ranges from 0.4 to 3.5% by weight based on the total weight of the mixture to be granulated.

7. The granulate of claim 1, wherein the dispersant for polar systems is selected from the group consisting of mono- or polyhydroxy compounds, mono- or polyhydroxyamine compounds, (poly)carboxylates, polyacrylates, lignin sulfonate, sulfated polyglycol ethers, melamine formaldehyde condensates, naphthalene formaldehyde condensates, alkyl-, aryl, or alkylaryl sulfonates, polyglycols, polyglycol derivatives, polyethers, cellulose derivatives, and combinations of these compounds.

8. The granulate of claim 7, wherein the hydroxyamine compounds comprise aminoethylpropanols.

9. The granulate of claim 7, wherein the hydroxy compounds comprise methyl propanols and glycols.

10. The granulate of claim 1, wherein the total quantity of the dispersants for polar systems ranges from 0.1 to 3% by weight based on the total weight of the mixture to be granulated.

11. The granulate of claim 10, wherein the total quantity of the dispersants for polar systems ranging from 0.25 to 1.7% by weight based on the total weight of the mixture to be granulated.

12. The granulate of any one of the previous claims, wherein the pigment is selected from the group consisting of an iron oxide pigment and a soot pigment.

13. A granulate according to any one of the previous claims,
**characterized in that** the solvent is a polar solvent, preferably water.

14. The use of mixtures of waxes according to claim 1 as an agent promoting the coloring and distribution of pigment in homopolar media in the manufacture of pigment granulates suitable for coloring of homopolar media like asphalt, bitumen, bituminous materials, tar and plastics.

15. A process to manufacture a granulate according to any one of claims 1 to 13,
**characterized in that** the pigments in the form of a powder mixture or a suspension in a solvent are blended with mixtures of non-ionogenic waxes and/or waxes with anionic ionogenity and/or waxes with cationic ionogenity and at least one dispersant for polar systems, and the resulting mixture is granulated by compressing, compacting, pressing, briquetting, spraying, fluidized bed drying or pelletizing or combinations of the above-mentioned granulating methods.

16. A process according to claim 15,
**characterized in that** the granulate is manufactured with the use of spraying methods.

## Revendications

1. Pigments sous forme de granulés pour teinter des substances non polaires telles que l'asphalte, le bitume, les matières bitumineuses, le goudron et les matières plastiques, produits à partir d'un mélange comprenant des pigments, des mélanges de cires non ionogènes et/ou de cires à ionogénité anionique et/ou de cires à ionogénité cationique et au moins un agent dispersant pour systèmes polaires ainsi que d'éventuels solvants, dans laquelle les cires utilisées comprennent un mélange de cire de polyéthylène et de cire de styrène-acrylate.

2. Granulés selon la revendication 1, **caractérisés en ce que** le point de fusion des cires utilisées se situe entre 50 °C et 200 °C.

3. Granulés selon la revendication 2, **caractérisés en ce que** le point de fusion des cires utilisées se situe entre 50 °C et 130 °C.

4. Granulés selon l'une quelconque des revendications précédentes, **caractérisés en ce que** les cires utilisées comprennent un mélange de cire de polyéthylène et de cire de paraffine.

5. Granulés selon l'une quelconque des revendications précédentes, **caractérisés en ce que** la quantité totale d'agents favorisant la teinture et la dispersion dans des substances non polaires est comprise entre 0,1 et 5 % en poids de la quantité totale du mélange à granuler.

6. Granulés selon la revendication 5, **caractérisés en ce que** la quantité totale d'agents favorisant la teinture et la dispersion dans des substances non polaires est comprise entre 0,4 et 3,5 % en poids de la quantité totale du mélange à granuler.

7. Granulés selon la revendication 1, **caractérisés en ce que** l'agent dispersant pour systèmes polaires est sélectionné dans le groupe des composés mono- ou polyhydroxylés, mono- ou polyhydroxylaminés, des (poly)carboxylates, des polyacrylates, du sulfonate de lignine, des éthers de polyglycol sulfatés, des condensats de mélamine-formaldéhyde, des condensats de naphtaline-formaldéhyde, des alkyl-, aryl- ou alkylarylsulfonates, des polyglycols, des dérivés de polyglycol, des polyéthers, des dérivés de cellulose et des combinaisons de ces composés.

8. Granulés selon la revendication 7, **caractérisés en ce que** les composés hydroxylaminés comprennent les aminométhylpropanols.

9. Granulés selon la revendication 7, **caractérisés en ce que** les composés hydroxylés comprennent les méthylpropanols et les glycols.

10. Granulés selon la revendication 1, **caractérisés en ce que** la quantité totale de dispersants pour systèmes polaires est comprise entre 0,1 et 3 % en poids de la quantité totale du mélange à granuler.

11. Granulés selon la revendication 10, **caractérisés en ce que** la quantité totale de dispersants pour systèmes polaires est comprise entre 0,25 et 1,7 % en poids de la quantité totale du mélange à granuler.

12. Granulés selon l'une des revendications précédentes, **caractérisés en ce que** les pigments sont sélectionnés dans les oxydes de fer et les pigments de noir de carbone.

13. Granulés selon l'une des revendications précédentes, **caractérisés en ce que** le ou les solvants sont des solvants polaires comme l'eau par exemple.

14. Utilisation de mélanges de cires selon la revendication 1, dans la production de pigments en granulés, comme agents favorisant la teinture et la dispersion dans des substances non polaires pouvant être utilisés pour teinter des substances non polaires telles que l'asphalte, le bitume, les matières bitumineuses, le goudron et les matières plastiques.

15. Procédé de production de granulés selon l'une des revendications 1 à 13, **caractérisé en ce que** l'on mélange des pigments, sous forme de mélange pulvérulent ou sous forme de suspension dans un solvant, avec des mélanges de cires non-ionogènes et/ou cires à ionogénité anionique et/ou cires à ionogénité cationique et au moins un dispersant pour systèmes polaires, et **en ce que** le mélange obtenu est granulé par compression, compactage, pressage, agglomération, atomisation, séchage en lit fluidisé ou par granulation par accumulation ou par une combinaison de ces procédés de granulation.

16. Procédé selon la revendication 15, **caractérisé en ce que** le granulat est produit par le procédé d'atomisation.
